Europäisches Patentamt

European Patent Office

Office européen des brevets

(11) Veröffentlichungsnummer: **0 215 234 B1**

(12) **EUROPÄISCHE PATENTSCHRIFT**

(45) Veröffentlichungstag der Patentschrift:
03.10.90

(51) Int. Cl.⁵: **G11B 15/467,** G05D 13/62

(21) Anmeldenummer: **86109924.0**

(22) Anmeldetag: **19.07.86**

(54) **Verfahren zur Phasenregelung von Motoren in Videorecordern.**

(30) Priorität: **10.08.85 DE 3528763**

(43) Veröffentlichungstag der Anmeldung:
**25.03.87 Patentblatt 87/13**

(45) Bekanntmachung des Hinweises auf die Patenterteilung:
**03.10.90 Patentblatt 90/40**

(84) Benannte Vertragsstaaten:
**AT BE CH DE FR GB IT LI LU NL SE**

(56) Entgegenhaltungen:
**DE-A- 2 013 477
DE-B- 2 449 423
US-A- 3 651 276**

(73) Patentinhaber: **Deutsche Thomson-Brandt GmbH,
Hermann-Schwer-Strasse 3 Postfach 1307,
D-7730 Villingen-Schwenningen(DE)**

(72) Erfinder: **Link, Hermann, Augenmoosstrasse 10,
D-7730 VS-Obereschach(DE)**

**Beschreibung**

Die Erfindung betrifft ein Verfahren zur Phasenregelung von Motoren in Videorecordern bei der Wiedergabe von auf einem Magnetband aufgezeichneten Videosignalen unter Verwendung eines Phasenvergleichs zwischen den Kopfumschaltimpulsen und den auf einer Spur des Magnetbandes aufgezeichneten Synchronimpulsen sowie mit einer Möglichkeit zur Verstellung der Soll-Phasenlage des Motors.

Ein Verfahren zur Phasenregelung eines Kopftrommelmotors gemäß dem Oberbegriff des Patentanspruches ist aus der Patentschrift US-A 3 651 276 bekannt.

Bei Videorecordern werden die Spuren von mehreren rotierenden Videoköpfen abgetastet. Damit die Köpfe bei der Wiedergabe die ihnen jeweils zugeordneten Spuren optimal abtasten, wird mit Hilfe von bei der Aufzeichnung der Videosignale mit aufgezeichneten aus den Vertikalsynchronsignalen abgeleiteten Synchronimpulsen eine Phasenregelung des Bandtransportmotors vorgenommen, so daß die Videoköpfe jeweils über den abzutastenden Spuren positioniert sind. Die Synchronimpulse werden bei der Wiedergabe von einem Kontrollkopf abgenommen. Dieser muß bei der Fertigung des Videorecorders genau justiert werden, damit jedes beliebige Videoband korrekt abgetastet werden kann. Die VHS-Norm schreibt z.B. vor, daß der Kontrollimpuls 6,5 Zeilen hinter dem Vertikalsynchronimpuls aufgezeichnet wird. Das erfordert eine hohe Genauigkeit der Einstellung des Kontrollkopfes. Wenn fremdbespielte Bänder über einen Videorecorder abgespielt werden, kommt es oftmals vor, daß die Videospuren in Bezug auf die Kontrollimpulse nicht mehr optimal liegen und daß dadurch die Phase des Bandvorschubs nicht mehr mit einer optimalen Spurabtastung übereinstimmt. Es ist daher bekannt, durch bewußte Verschiebung des Kontrollimpulses die Phase derart nachzustellen, daß die Videoköpfe bezüglich der abzutastenden Spuren richtig liegen. Dazu dient ein sogenannter von außen bedienbarer Tracking-Steller, der es ermöglicht, von einer Mittelstellung, die der Normstellung entspricht, den Soll-Wert des Kontrollimpulses zu verstellen. Dies ist möglich in den Grenzen ±90° in Bezug auf den Kopfschaltimpuls. Dies geschieht durch Verstellen eines Potentiometers, welches die Zeitkonstante eines Multivibrators verändert und somit die Flanke des Kontrollimpulses verschiebt. Bei einer Verschiebung in die eine oder andere Richtung verkeinert sich jedoch der Fangbereich der Phasenregelung dadurch, daß die Grenzen mit +90° und -90° festliegen. Bei einer Phasenverstellung von z.B. +30° liegt der Fangbereich theoretisch bei +60° bis -120°. Da sich der Fangbereich praktisch jedoch symmetrisch auf die eingestellte Soll-Lage bezieht, verkleinert er sich auf ±60°.

Der Erfindung liegt die Aufgabe zugrunde, eine Phasenregelung mit einer Tracking-Einstellung von ±180° zu erreichen, das heißt über den gesamten Winkelbereich und auch darüberhinaus. Diese Aufgabe wird durch die im Kennzeichen des Patentanspruchs angegebene Erfindung gelöst. Sie bringt den Vorteil, daß bei Einstellung auf einen bestimmten Phasenwert der Fangbereich über ±180° symmetrisch erhalten bleibt, da die Regelung sowohl nach positiven als auch nach negativen Abweichungen nicht begrenzt ist wie beim bekannten Stand der Technik.

Nachstehend wird die Erfindung mit Hilfe der Zeichnung beschrieben.

Figur 1 zeigt ein Ablaufdiagramm des angemeldeten Verfahrens;
Figur 2 dient zur Erläutertung der Phasenregelung.

Zunächst wird durch den Kopfschaltimpuls ein Zähler zurückgesetzt. Von diesem Zeitpunkt an zählt dieser Clock-Impulse, wobei der erreichte Zählerstand zum Zeitpunkt des über den Kontrollkopf KK detektierten Synchronimpulses in einem Speicher festgehalten wird. Das gespeicherte Ergebnis wird an eine Vergleichsstufe gegeben, in welcher der gemessene Ist-Wert mit einem vorgebbaren Soll-Wert verglichen wird, indem der Soll-Wert vom Ist-Wert subtrahiert wird. Dieser Ist-Wert ist auf den Soll-Wert zu regeln. Dazu wird in einer Abfrage festgestellt, ob der Ist-Wert einem Wert entspricht, der unterhalb einer Abweichung von +180° liegt. Ist dies der Fall, wird aus dieser Abweichung die Regelgröße R gebildet, die nach einer Digital-Analog-Wandlung auf den Servokreis des Capstan-Motors einwirkt, um die Abweichung zu verkleinern, bis diese zu 0 geworden ist.

Ist die Abweichung größer als +180°, wird von der ermittelten Abweichung ein Zählwert abgezogen, der einer vollem Umdrehung der Kopftrommel entspricht. Dieser Wert R = I - S - N dient als Regelgröße zur Nachsteuerung der Phasenlage. N sei die Anzahl der gezählten Impulse einer Umdrehung bei der Solldrehzahl. Ist die Abweichung zu Beginn kleiner als 0, wird zunächst festgestellt, ob diese kleiner als -180° ist. Wenn nicht, wird der ermittelte Wert R = I - S zur Regelung benutzt, andernfalls wird zu dem ermittelten Wert die Größe N hinzuaddiert, so daß eine Regelspannung entsprechend R = I - S + N erhalten wird. Durch diese zusätzliche Korrektur N der ermittelten Werte für R wird erreicht, daß die Phase jeweils auf den kürzesten Winkelbereich ausgeregelt wird. Die Soll-Phasenlage kann mit Hilfe des beschriebenen Verfahrens in Bezug auf die Null-Phasenlage des Kopfschaltsignals zwischen 0° und 360° an jede beliebige Stelle gelegt werden. Man kann die Soll-Vorgabe auch über diese 360° hinaus verändern, was bedeutet, daß auf die nächstfolgende Spur des dieser zugeordneten Videokopfes geregelt wird. Durch Vorgabe eines digitalen Wertes als Offset kann leicht auf beliebige Winkel eingestellt werden. Das läßt eine Einknopfbedienung der Tracking-Verstellung zu, indem der Soll-Wert bei Betätigen einer Taste laufend inkrementiert wird. Bei Überschreiten des Winkelbereichs von 360° wird diese 360°-Stellung als Referenz gewertet.

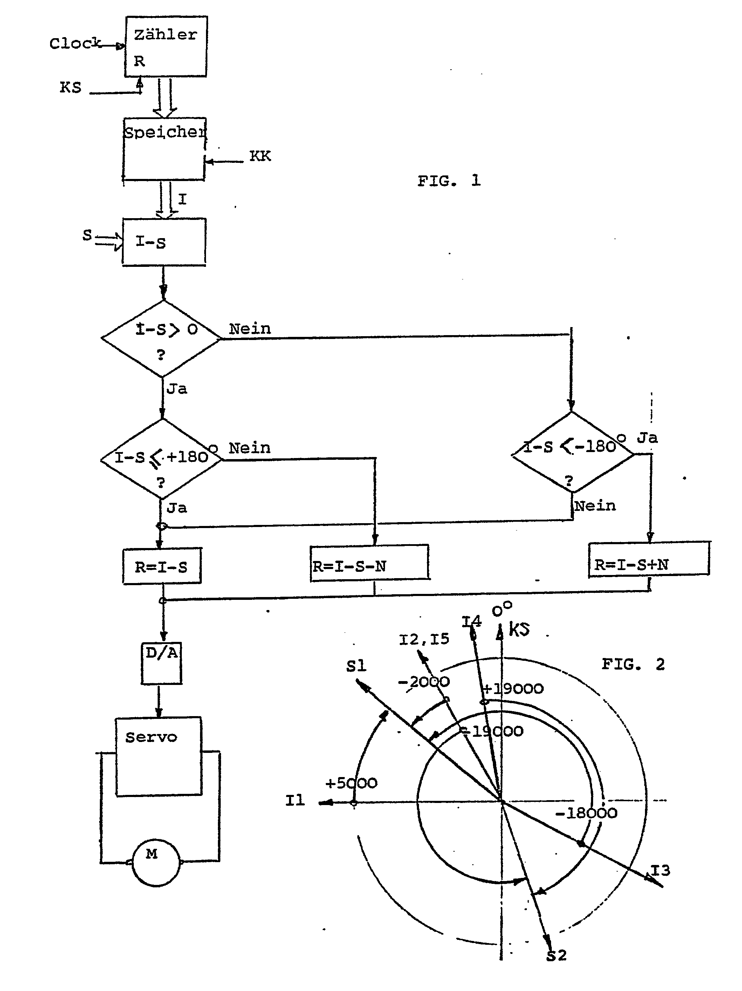

An einem Schema soll das Verfahren verdeutlicht werden. Der Zählwert für eine Umdrehung der Kopftrommel betrage z.B. N = 40 000. Für 180° entspricht dies einem Wert von N/2 = 20 000. In Figur 2 sind beispielsweise zwei verschiedene Trackingwerte S1 und S2 aufgezeichnet. Der erste Trackingwert S1 befindet sich bei einem Winkelwert, der dem Zählwert n = 5 000 entspricht, der zweite Trackingwert S2 soll einem Wert von n = 22 000 entsprechen. Es hängt nun von den Ist-Werten I ab, in welche Richtung geregelt wird bzw. welcher Regelwert R gebildet wird.

Nachfolgende Tabelle gibt einige Beispiele zur Erzeugung der Regelspannungswerte, die in Verbindung mit Figur 2 in Form eines Vektordiagramms aufgetragen sind.

| S | I | I-S | I-S > 0 | I-S < +N/2 | I-S < -N/2 | R |
|------|-------|--------|------|------|------|---------|
| 5000 | 10000 | +5000 | ja | ja | – | +5000 |
| 5000 | 3000 | -2000 | nein | – | nein | - 2000 |
| 5000 | 27000 | +22000 | ja | nein | – | -18000 |
| 22000 | 1000 | -21000 | nein | – | ja | +19000 |
| 22000 | 3000 | -19000 | nein | – | nein | -19000 |

## Patentansprüche

Verfahren zur Phasenregelung eines Kopftrommelmotors in einem Videorecorder bei der Wiedergabe von auf einem Magnetband aufgezeichneten Videosignalen unter Verwendung eines Phasenvergleichs zwischen den Kopfumschaltimpulsen und den auf dem Magnetband aufgezeichneten Synchronimpulsen, wobei die Sollphasenlage des Motors einstellbar ist, sowie mit einer Einrichtung zur Messung der augenblicklichen Abweichung von der Sollphasenlage durch Abzählen von Clockimpulsen, die zwischen dem Kopfumschaltimpuls und dem Synchronimpuls auf einen Zähler gegeben werden, dadurch gekennzeichnet, daß aus der Differenz der in den Zähler eingelaufenen Anzahl der Istimpulse I und der Anzahl der vorgegebenen Sollimpulse S ein Regelsignal R für den Kopftrommelmotor abgeleitet wird, wobei
R = (I–S) wenn,
    a) (I–S) positiv und kleiner als +N/2 oder
    b) (I–S) negativ und größer als –N/2 ist
R = (I–S)+N, wenn
    (I–S) negativ und kleiner als –N/2 ist
R = (I–S)–N, wenn
    (I–S) positiv und größer als +N/2 ist,
wobei N der Zahl der Clockimpulse für eine Umdrehung des Kopftrommelmotors entspricht.

## Claims

A method for the phase control of a head drum motor in a video recorder during the reproduction of video signals recorded on a magnetic tape using a phase comparison between the head-switching pulses and the synchronizing pulses recorded on the magnetic tape, the desired phase position of the motor being adjustable, and with a device for measuring the instantaneous deviation from the desired phase position by counting clock pulses, which are fed to a counter, between the head-switching pulse and the synchronizing pulse, characterised in that a control signal R for the head drum motor is derived from the difference between the number of actual pulses I which have entered the counter and the number of preset desired pulses S, wherein
R = (I–S), if
    a) (I–S) is positive and less than +N/2 or
    b) (I–S) is negative and greater than –N/2
R = (I–S)+N, if
    (I–S) is negative and less than –N/2
R = (I–S)–N, if
    (I–S) is positive and greater than +N/2,
wherein N corresponds to the number of clock pulses for one revolution of the head drum motor.

**Revendications**

Procédé de régulation de phase d'un moteur de roue porte-têtes monté sur un enregistreur vidéo lors de la reproduction de signaux vidéo enregistrés sur une bande magnétique en utilisant une comparaison des phases entre les impulsions de commutation de la tête et les impulsions de synchronisation enregistrées sur la bande magnétique, la relation théorique des phases du moteur étant réglable, et comprenant un dispositif de mesure de l'écart instantané par rapport à la relation théorique des phases par comptage des impulsions d'horloge qui sont appliquées à un compteur entre l'impulsion de commutation de la tête et l'impulsion de synchronisation, caractérisé en ce qu'un signal de régulation R est dérivé pour le moteur de roue porte-têtes à partir de la différence du nombre d'impulsions effectif I enregistré par le compteur et le nombre d'impulsions théorique donné S, où

R = (I–S) si

a) est positif et plus petit que +N/2 ou
b) (I–S) est négatif et plus grand que –N/2

R = (I–S)+N si

(I–S) est négatif et plus petit que –N/2

R = (I–S)–N si

(I–S) est positif et plus grand que +N/2, N étant le nombre d'impulsions d'horloge pour une révolution du moteur de roue porte-têtes.

FIG. 1

FIG. 2